**Europäisches Patentamt**

(19) **European Patent Office**

**Office européen des brevets**

(11) Publication number: **0 116 731**
**A1**

(12) **EUROPEAN PATENT APPLICATION**

(21) Application number: **83300655.4**

(22) Date of filing: **09.02.83**

(51) Int. Cl.³: **B 62 M 9/08**

(43) Date of publication of application:
**29.08.84 Bulletin 84/35**

(84) Designated Contracting States:
**DE FR GB IT**

(71) Applicant: **FULLERTON, Robert L.**
**327 Deville Oak Court**
**Citrus Heights California 95610(US)**

(72) Inventor: **FULLERTON, Robert L.**
**327 Deville Oak Court**
**Citrus Heights California 95610(US)**

(74) Representative: **Feakins, Graham Allan et al,**
**Haseltine Lake & Co. Hazlitt House 28, Southampton**
**Buildings Chancery Lane**
**London WC2A 1AT(GB)**

(54) Automatic transmission having a continuously variable drive ratio.

(57) An automatic transmission that includes a first rotating assembly (310, 320) that is coupled by a bias member (340) to a second rotating assembly and the second rotating assembly will vary the effective diameter of movable sprocket wheel assemblies thereof responsive to a torque applied to the transmission. The bias member is a spring connected to bias the first and second rotating assemblies to a first relative position. As a torque is applied and increased, the bias tension is overcome and relative rotation of the first and second assemblies occurs. The individual sprocket wheels (341) of the sprocket wheel assemblies thereby travel toward a second relative position, changing the transmission effective diameter.

Fig. 2

Fig. 4

## AUTOMATIC TRANSMISSION HAVING A
## CONTINUOUSLY VARIABLE DRIVE RATIO

The invention relates to infinitely variable transmissions where the effective diameters of drive and driven portions thereof proportionally vary in relation to their speed of turning providing an automatically varying drive ratio therebetween.

A common use for a transmission is to couple it to a driving source, such as a motor, to the drive train of a system or directly to the wheels of an automobile or bicycle. Transmissions have generally accomplished a gearing up or a gearing down between a driving member and a driven member by varying the relative rotation between the members through a series of ratios or "gears", the ratio being varied stepwise or continuously over some predetermined range.

Automatic transmissions have generally involved very complex arrangements of torque converters, gears, etc. arranged to cause the transmission to shift between a few preselected drive ratios at predetermined points. Typically, these points are at clearly defined occurrences, for example specific rotational speeds of the driving or driven member.

Where such transmissions employ gear-to-gear clutch shifting, a smooth power transfer between ratios is obtained. However, it has been difficult to provide for a smooth power transfer between ratios with chain drive systems that are particularly useful in light duty applications such as bicycles and motorcycles. This is, of course, due to the requirement that a fixed length of chain be used that needs to be tightly maintained between sprockets. Heretofore, chain drive transmission mechanisms have generally utilized connected sprocket wheels of graduated dimensions operating with a derailleur system to shift the chain from one sprocket wheel to the next. These systems are typically not reliable in that they require precise and frequent adjustment, do not shift well under a heavy load, and the missing of a sprocket wheel during a shift results in catastrophic failure of the system, the chain falling between the sprocket wheels, and the mechanism jamming.

While such graduated sprocket and derailleur systems are most commonly used as bicycle transmissions, a number of other arrangements have been proposed for providing a drive ratio variance to a chain-driven system. Some early examples of transmission devices are shown in U.S. Patent Nos. 616,630 and 698,854 by J.C. Pratt; U.S. Patent No. 1,496,032 by F.H. Sleeper; U.S. Patent No. 2,584,447 by L.A. Hayot; and two foreign patents, Norwegian Patent No. 55,912 by E. Helmers Olsen, and Swiss Patent No. 174,415 by Philipp Zucker. The present invention is unlike the first Pratt Patent, No. 616,630, Hayot Patent No. 2,484,447, and Swiss Patent No. 174,415 by Zucker that all utilize individual biased paddle members that will not uniformly extend outwardly under the urgings of centrifugal force. However, some of these patents, particulary the second Pratt Patent, No. 698,854, Sleeper Patent No. 1,496,032, and Norwegian Patent No. 55,912 by Olsen, do have similarities to the present invention. Specifically, like the present invention, the Pratt Patent No. 698,854 involves outwardly expanding drive members for interdigitation with the chain links. However, these patents show a splined connection of the transmission plates and hub, resulting in a far more complicated biasing arrangement than that of the present invention.

The Sleeper Patent No. 1,496,032, similar to Pratt Patent No. 698,854, also connects the hub and plates together and relies on spring expansion and contraction to obtain the desired change in pulley diameter. The present invention, of course, utilizes a variance in the relative positioning of a hub and outer plates to effect the desired change in effective diameter.

The Olsen Patent No. 55,912, of course, involves a planetary gear arrangement for moving the hub and linked sprockets to effect a change in pulley diameter. This arrangement is distinct from that of the present invention that provides a biasing for interconnecting outer plates and hub. Also, unique from the device of Olsen, the present invention provides for supporting individual sprocket wheel axles at two spaced-apart locations, and is otherwise structually and functionally different therefrom.

In addition to the above-cited older patents, certain U.S. patents by Tompkins (No. 3,956,944); Pipenhagen, Jr. (No. 3,969,948); Newell (No. 3,995,508); and Nye (No. 4,068,539) show variable ratio chain drive arrangements. The Nye patent is cited for information only and is unlike the present invention. The Newell and Pipenhagen patents involve idler arrangements that operate in conjunction with a varying ratio transmission, and the spring biased take-up arrangement of the Newell patent is unlike the present invention. The Pipenhagen patent, unlike the present invention, provides a complicated bell crank and spring arrangement for urging cantilevered sprocket members outwardly under the urgings of centrifugal force. Finally, the Tompkins patent fixes together outer plates and a hub, and moves sprocket or teeth members responsive to a spring biasing. This arrangement is unlike the present invention that does not spline the sprocket to the outer plates and is also otherwise functionally distinct from the Tompkins' arrangement.

In the preferred embodiment of an automatic transmission of the present invention, drive torque is applied to a first rotating assembly. This first rotating assembly is coupled via a bias member to a second rotating assembly. The second rotating assembly varies its effective diameter in response to a torque applied to the transmission. In the preferred embodiment, the first and second rotating assemblies have the same rotational axis, but can rotate relative to one another over a predetermined range. A spring as the bias member holds the first and second rotating assemblies in a first relative position. In operation, as an applied torque increases, the bias tension is overcome and relative rotation of the first and second assemblies occurs toward a second relative position to simultaneously either decrease or increase diameter of the second rotating assembly. With a lessening of applied torque, the bias tension urges the relative rotation of the first and second assemblies back to the biased state.

Utilizing a single transmission, an idler gear, a chain or belt, transferring power through an idler gear, is preferred as part of the system to take up and provide chain slack to a drive portion as required over the shifting range. In such arrangement, the spring biasing is arranged to move a sprocket wheel arrangement from a greater to lesser effective diameter response to a higher to lower applied torque. However, in an embodiment that utilizes two transmissions, no idler gear is required. In such arrangement, one transmission is placed at the driving source and the other is placed at the driven member. In a bicycle, for example, one transmission is arranged at the pedal crank and the other at the rear wheel. The variable diameter arrangement of the transmission is a sprocket support structure mounting sprocket wheels thereon or sprocket wheel assembly in the transmission at the pedal crank is biased open to its largest effective diameter, while the sprocket wheel assembly in the transmission at the rear wheel is biased to its smallest diameter. In such arrangement, the transmission at the pedal crank operates as above mentioned and the transmission at the rear wheel assembly operates oppositely. At high torque, as at start-up, the spring biasing is overcome and a lowest ratio is present; whereafter, as the bicycle speed is built up, the applied torque decreases and the spring biasing tends to overcome the applied torque. The pedal transmission thereby goes from its smallest effective diameter at start-up and the rear transmission is opened to its largest diameter as a lowest ratio. Thereafter, as less work is required to maintain the bicycle at a desired speed with, therefore, less torque applied, the pedal transmission sprocket wheel will expand toward its full open or maximum effective diameter and, proportionally, the rear wheel transmission is contracted to its smallest effective diameter, resulting in a highest ratio. The appropriate selection of both the sprocket wheel minimum and maximum diameters and the appropriate bias members to accommodate the expected load range will thereby provide a continuously variable automatic transmission.

The lowest and highest ratio combination possible will be determined in each individual case by the ratio of the minimum and maximum effective diameters of the pedal and wheel transmissions' sprocket wheels. Floater bearings are alternated in each sprocket wheel of a sprocket wheel assembly. These floater bearings insure that any slack resulting from rapid contraction in the sprocket wheel diameter will not be translated to a drive chain or belt and will be taken up in a smooth fashion.

Fig. 1 illustrates a bicycle having dual transmissions in accordance with a first embodiment of the present invention;

Fig. 2, a perspective cutaway view of the first embodiment of the automatic transmission of the present invention;

Figs. 3A, 3B, and 3C, show various effective diameters of the sprocket wheel assembly in response to the torque applied;

Fig. 4, a cross-sectional side view of a first embodiment;

Fig. 5A, a top view and Fig. 5B, a cross-sectional side view of the sprocket wheel arm of in the first embodiment;

Fig. 6A, a top view of the sprocket wheel assembly of the first embodiment;

Fig. 6B, a sectional view taken along the line 6b–6b of Fig. 6A;

Fig. 7A, a top view of the star wheel assembly of the first embodiment;

Fig. 7B, a sectional view taken along the line 7b–7b of Fig. 7A;

Fig. 8A, a top view and Fig. 8B, a side elevation view of a bushing of the first embodiment;

Fig. 9A, a top view, Fig. 9B, a side view, and Fig. 9C, an end view of the sprocket axle of the preferred embodiment;

Fig. 10, a perspective view with a portion shown removed of a second embodiment of the automatic transmission of the present invention;

Fig. 11, a side sectional view taken along the line 11–11 of the second embodiment;

Fig. 12, an exploded perspective view of a spring adjuster assembly of the second embodiment;

Fig. 13, a side view of the assembled spring adjuster assembly of Fig. 12;

Figs. 14A, 14B, and 14C, show various adjuster positions of the spring adjusters of the second embodiment;

Fig. 15A, a top view of one of the opposing plates of a third embodiment of the present invention;

Fig. 15B, a sectional view taken along the line 15B–15B of Fig. 15A;

Fig. 16A, a top view of the other plate of the third embodiment;

Fig. 16B, a sectional view taken along the line 16B–16B of Fig. 16A;

Fig. 17A, a top view and Fig. 17B, an end view of the sprocket axle of the third embodiment;

Fig. 18, a perspective view showing a portion removed from the third embodiment;

Fig. 19, a side elevation sectional view of the third embodiment; and

Figs. 20A, 20B, and 20C, show the relative positioning of the drive plates and the sprocket wheel axle during shifting of the third embodiment.

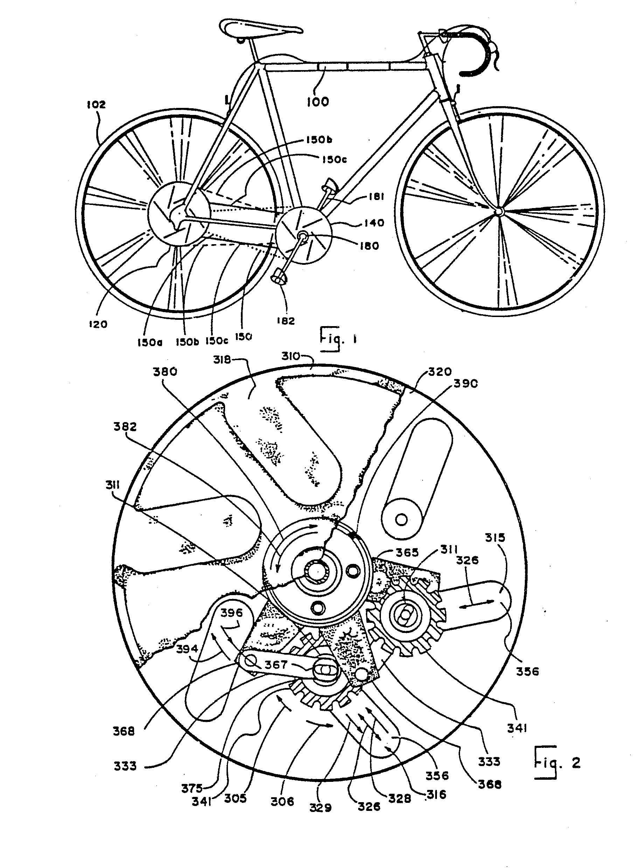

Referring now to Fig. 1, therein is shown a bicycle 100 that includes front and rear transmissions 140 and 120 in accordance with the preferred embodiments. The two transmissions are shown interconnected by chain 150, and cooperate together to continuously vary the ratio of the number of turns of pedal crank 180 with respect to the rotation of rear wheel 102. Pedal crank 180 is directly coupled to pedals 181 and 182. Pedal crank 180 is also directly coupled to the outer or primary discs of front transmission 140. Chain 150 passes across sprocket wheel assemblies of both front and rear transmissions 140 and 120, which sprocket wheel assemblies, as set out hereinbelow, will vary in effective diameter in response to an applied torque or torque reaction force applied thereto.

In Fig. 1, the front transmission 140 sprocket wheel assembly is shown biased to its maximum effective diameter; and, conversely, the sprocket wheel assembly within rear transmission 120 is biased to a smallest effective diameter possible within its range. Thus, when the bicycle is at rest and no torque is applied to pedal crank 180 through pedals 181 and 182, the front and rear transmissions 140 and 120 are automatically in their highest ratio, resulting in a maximum turning of the rear wheel for each turn of the pedal crank.

Also in Fig. 1, there are shown two other possible positions of the chain when the transmission is in use. When the chain is in the position as shown by the dotted line 150a, it is in the highest ratio as described above. This is the normal position when the bicycle is at rest or when the minimum torque is applied to the pedal crank. When peddling is started and the bicycle is accelerating, such as in climbing an incline or in any other activity where a large torque is applied to the pedal crank, the bias tension of the sprocket wheel assemblies in both front and rear transmissions 140 and 120 will be overcome. The operation of these assemblies is described more fully below. However, for this preliminary explanation, it is sufficient to say that when the biased tension is overcome, the sprocket wheel assembly in rear transmission 120 is expanded toward its largest operating effective diameter, and the sprocket wheel assembly in front transmission 140 is contracted toward its smallest operating effective diameter. As this occurs, the front and rear transmissions 140 and 120 have automatically and continuously shifted the bicycle into low ratio and chain 150 substantially assumes the position shown by line 150b. Between these two aforementioned stages, the transmission passes through various intermediate gear ratios, such as the one indicated by line 150c.

It should be noted that since a contraction of the front sprocket wheel assembly effective diameter is accompanied by a corresponding expansion of the rear sprocket wheel assembly effective diameter and, likewise, a contraction of the rear transmission 120 sprocket wheel assembly effective diameter is accompanied by a corresponding increase in the sprocket wheel assembly effective diameter of the front transmission, the chain travel path will always be substantially of the same distance. Hence no idlers or other mechanisms are necessary to accommodate chain slack. This is true when two transmissions of opposing and substantially equal bias tension are employed, as in this first embodiment of the present invention.

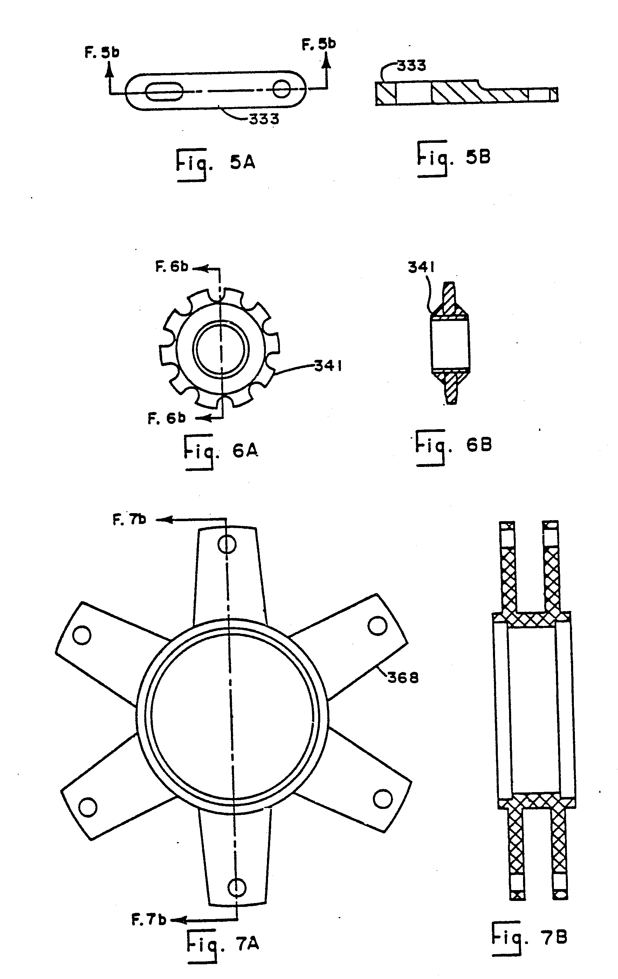

Referring to Fig. 2, therein is shown a cutaway view of a transmission assembly in accordance with the preferred embodiment. Shown therein and in the sectional view of Fig. 4, inner and outer plates 310 and 320 are arranged together and have corresponding recesssed grooves or channels 315 and 316 on their inside portions. The positioning of these grooves is shown by relief portion 318 on the outside of the discs of Fig. 2, and does not extend through the plate. Grooves or channels 315 and 316 are formed in plates 310 and 320 just deep enough to receive the roller bearings of each sprocket wheel 341 fitted to travel freely back and forth therein as indicated by arrow 326. The channels are slightly oversized so that bushings 311 of each sprocket wheel will move easily up and down therein. So arranged, each sprocket wheel functions similarly to a cam-follower as each is driven via arms 333 that are coupled to projections 368 of a star wheel assembly 365, as is shown best in Figs. 7A and 7B, the star wheel assembly with the individual sprocket wheels constituting a sprocket wheel assembly.

Fig. 4 includes some of the members of the preferred embodiment that are not shown in Fig. 2. For example, Fig. 4 shows the roller bearings as being held in place and driven by upper and lower star wheel projections 368 and arms 333 of each sprocket wheel 341. So arranged, equal force is applied to each side of the roller bearings, precluding a twisting action that could cause jamming of a roller bearing within a channel.

Referring still to Fig. 2, it should be noted that alternating sprocket wheels 341 have roller clutch assemblies 375. These alternate roller clutch assemblies allow rotation of the sprocket wheel in one direction only. In the preferred embodiment, these sprocket wheels use roller clutches similar to a Torrington Roller Clutch No. RC-040708 or the like. In contrast to the sprocket wheels that have roller clutch asemblies, each other roller bearing is completely free-wheeling to rotate in either direction. The possibility of chain hangups, with the chain jumping off the individual sprocket wheels is thereby minimized as the free-wheeling sprocket tend to remain in firm engagement with the chain even when the applied torque is rapidly varied resulting in a rapid expansion and contraction of the sprocket wheel assembly.

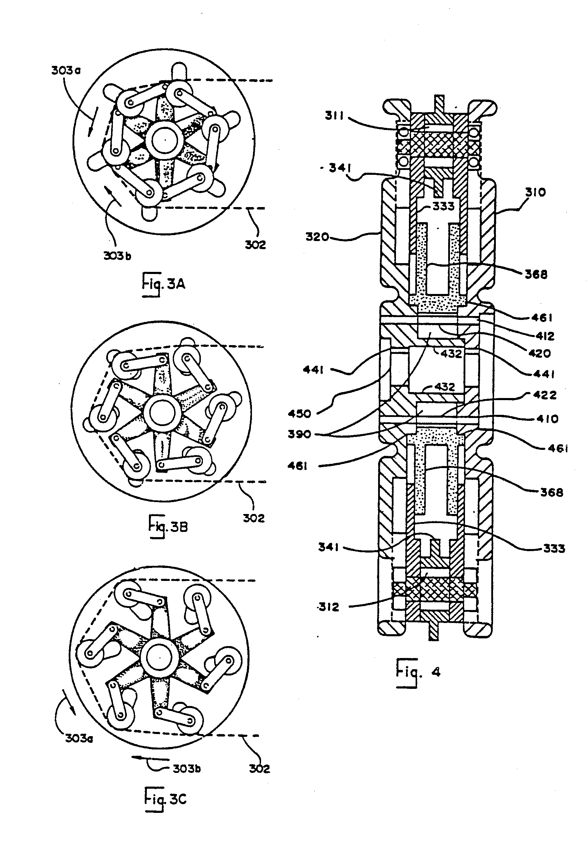

When the transmission is at rest with no torque being applied, bias spring 390 will keep the sprocket wheels 341 in their furthest ends 356 of the channels from a horizontal center axis. As torque is applied, with the direction of rotation as shown by arrow 380, the star wheel assembly moves in relative rotation to the outer plates as indicated by arrow 394 until, at the maximum angular displacement, the sprocket wheels of the sprocket wheel assembly are substantially in the position shown in Fig. 3A. In this position, the bias tension of spring 390 has been completely overcome and the sprocket wheel assembly is positioned at its minimum effective diameter. As the load lightens, bias spring 390 will overcome the applied torque to cause the star wheel assembly 365 to rotate in the direction indicated by arrow 396 in Fig. 2, relation to outer discs 310 and 320. This relative rotation causes the sprocket wheels to move in the direction indicated by arrow 329 within the channels of outer discs 310 and 320. Shown in Fig. 3A, chain 302 is moving in the direction indicated by arrow 303b to cause the above-described sprocket wheels outward movement in response to the torque applied, increasing the effective diameter of the sprocket wheel assembly. As set out above, the sprocket wheels 341 each have roller clutch bearings and rotate only in the direction shown by arrow 306 in Fig. 2, and will not rotate in the opposite direction shown by arrow 305.

For the rear transmission 120, the bias tension is provided in the opposite direction to that described above. For that assembly, under no applied load, the bias tension would maintain the sprocket wheels in their smallest effective diameter. Increasing the applied torque causes the individual sprocket wheels to move along channels 315 and 316 until they reach the outermost channel position 356 at their maximum effective diameter of the sprocket wheel assembly.

Referring now to Fig. 4, the sprocket wheels in the assembly are illustrated in their most extended position, with inner and outer plates 310 and 320 shown held together by set screws or pins 410 and 412. Spacers 420 and 422 and outer disc projections 432 are provided to insure that the inner and outer discs are maintained at a proper distance from each other. A bias spring 390 is shown preferably connected at one end to star wheel assembly 365, whereon are arranged equally spaced projections 368, with the other bias spring end attached to disc 310 as by wrapping it around pin 410.

In practice, as shown best in Fig. 4, a central bearing assembly 450 constitutes a solid structure when the transmission is coupled to the driving source. However, for use as the rear transmission 120, the bearing assembly could consist of a roller clutch assembly that is arranged to allow disengagement therebetween or free-wheeling of the assembly so as to provide a neutral gear, allowing coasting. Keys or splines 441 are provided to prevent relative rotation of bearing assembly 450 and plates 310 and 320. Roller clutches or bearings are used in positions 311 and 312 depending upon whether the individual sprocket wheel will be load-bearing to turn only in one direction, or will be "free-wheeling" to take up the slack of the chain during quick changes in the effective diameter of the sprocket wheel assembly.

In Fig. 4, bearing areas 461 are provided to insure that star wheel assembly 368 will slip by the mating surface with plates 320 and 310 responsive to changes in the applied torque. For example, a nylon or like low friction material insert can be used as each bearing area 461, and alternatively, dissimilar materials can be used and/or the mating surfaces can be polished, or the like.

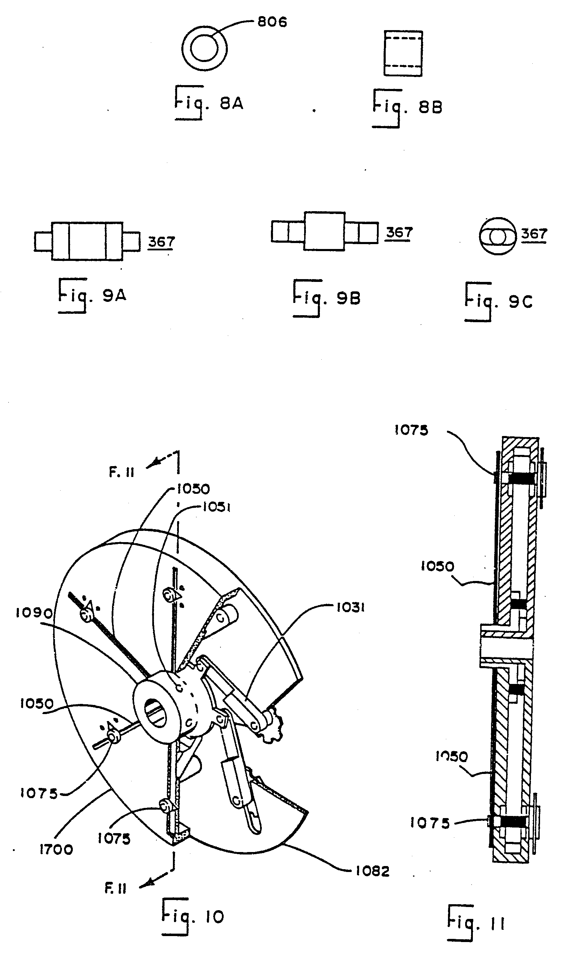

Detail drawings of shifting arm 333, sprocket wheel 341, and star wheel 365 are provided, respectively, in Figs. 5A and 5B, Figs. 6A and 6B, and Figs. 7A and 7B, that function and interact as described hereinabove. In Figs. 8A and 8B are shown details of a preferred bushing 806; and in Figs. 9A, 9B, and 9C are shown, respectively, a top, side, and end view, of sprocket axle 367, described hereinabove for use in the preferred embodiment. Sprocket wheels 341 that are described for use in the alternate idler sprocket assemblies may be made entirely of nylon, teflon, or some other like low friction material, since they are not load-bearing and contribute no additional drag to reduce the efficiency of the transmission. However, in applications where metallic floater sprocket wheels are utilized, bearing assembly bushing 806, made of a dissimilar metallic material, shown in Fig. 9, should be used.

Figs. 3A, 3B, and 3C show the sprocket wheel assembly in its least or smallest, middle, and largest effective diameters, respectively. These figures show the relative positions of the individual sprocket wheels 341 of the transmission described above. Fig. 3A illustrates the at-rest or no-load position of a chain travel direction under load for this transmission, shown by arrow 303A. As the applied torque increases, the effective diameter increases until the middle position of the sprocket wheel assembly, shown in Fig. 3B, is reached. Ultimately, as additional torque is applied, the maximum effective diameter of the assembly, as shown in Fig. 3C, is reached.

Typically a transmission attached to a driven member is biased to its maximum effective diameter, and a no-load or at-rest position of such transmission is shown in Fig. 3C. As torque is applied and increased, the effective diameter of the sprocket wheel assembly decreases to that shown in Fig. 3B under a medium torque. Finally, the effective diameter will reduce to that shown in Fig. 3A under any torque sufficient to overcome bias spring 390 and maintain the sprocket wheel assembly in its minimum effective diameter. This turning is illustrated by the direction of the chain travel as shown by arrow 303B. The shifting range and torque necessary to reach the maximum or minimum effective diameter of the sprocket wheel assembly are preselected for the anticipated load range by selection of an appropriate sprocket channel length and bias spring 390 respectively. The direction of chain travel described above is reversed by reversing the mounting of the transmission on the shaft.

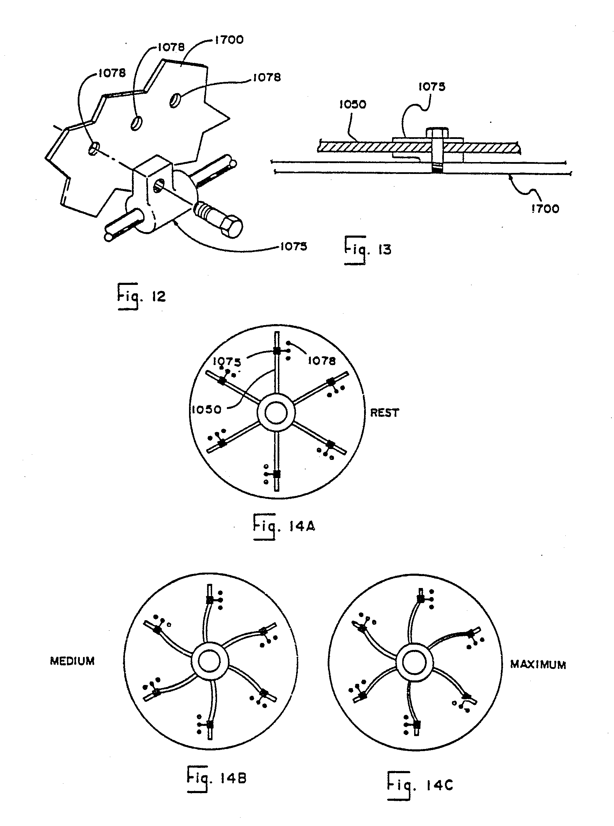

Referring now to Figs. 10, 11, 12, 13, 14A, 14B, and 14C, therein is shown a second embodiment of the automatic transmission of the present invention that functions as described for the transmission of the first embodiment, except as set out below. Unlike the first embodiment, in the transmission of the second embodiment, individual sprocket wheels like the described sprocket wheels 341 are not arranged between the two plates. Rather, they are supported to the outside of one of the plates, turning on the outside of that plate. Also, in this arrangement, the bias spring is preferably not located within the hub mechanism and consists of a set of rod springs 1050 that are mounted to sprocket hub assembly 1090. In this embodiment, therefore, the applied torque must overcome the composite resistance of all the springs.

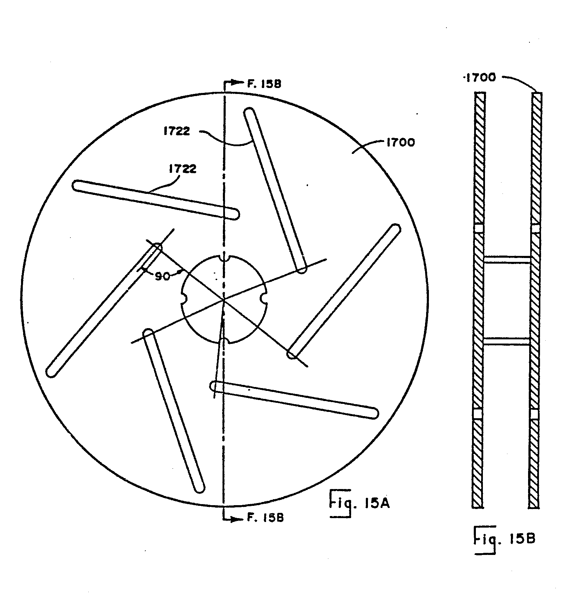

In this second embodiment, the resistance of the springs is adjustable by appropriately setting spring adjuster 1075 to one of the positions provided by mounting holes 1078. This adjustment is used to alter the torque range over which the shifting will occur. Thereby, the transmission can be adapted to suit many different combinations of load and torque. In this embodiment, the effective diameter of the sprocket wheel assembly can be set over the shifting range by moving one or more of the spring adjusters 1075 along springs 1050. This movement of the spring adjuster toward the center hub increases the amount of torque required to move the sprocket wheels. Preferably all springs should be adjusted to the same position to maintain a balanced load on the transmission parts. Springs 1050 are preferably coupled to hub 1090 at points 1051. So arranged, a torque application will cause relative rotation of housing 1082 with respect to the sprocket wheel assembly that consists of hub 1090, arms 1031, bearings 1042, and sprocket wheels 1060. An important advantage of this embodiment is that the springs are mounted on the exterior of housing 1082. This arrangement facilitates adjustment and simplifies access for inspection and replacement. The relative positions of rod springs 1050 and adjuster assemblies 1075 to the housing slots over the shifting range are shown in Figs. 14A, 14B, and 14C, with detailed views of the housing slot and the spring clamp and adjustment assembly shown in Figs. 12 and 13.

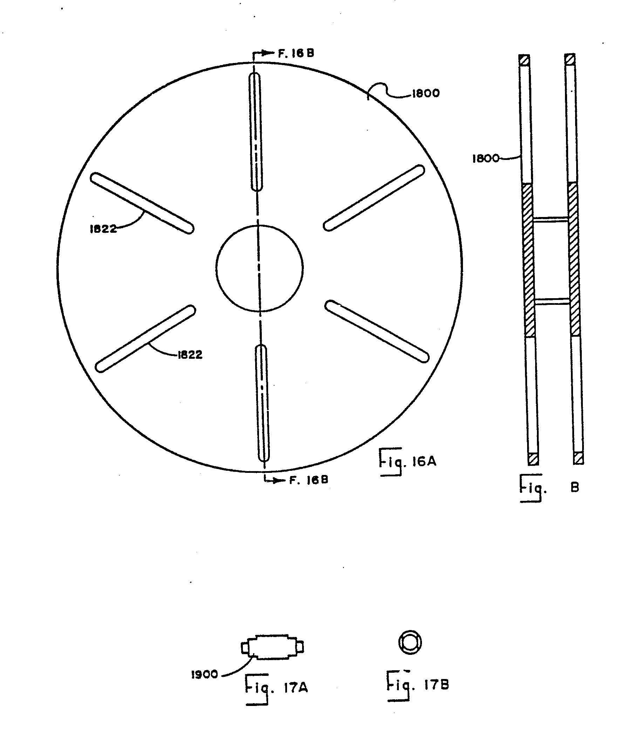

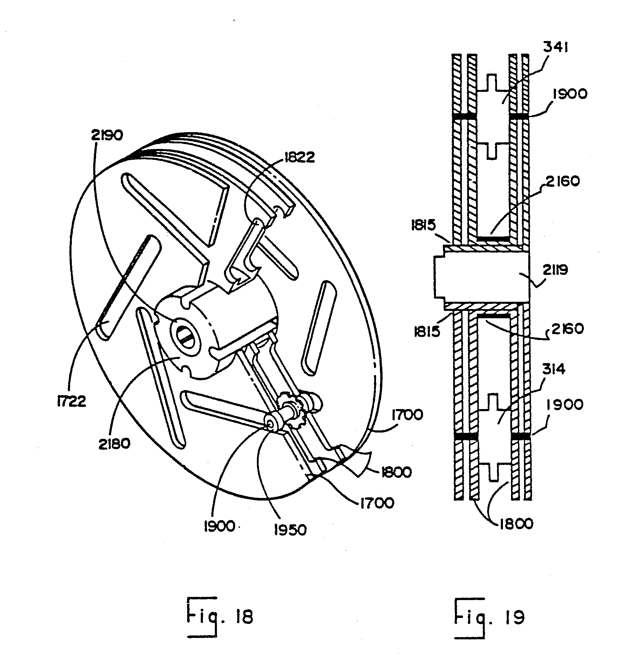

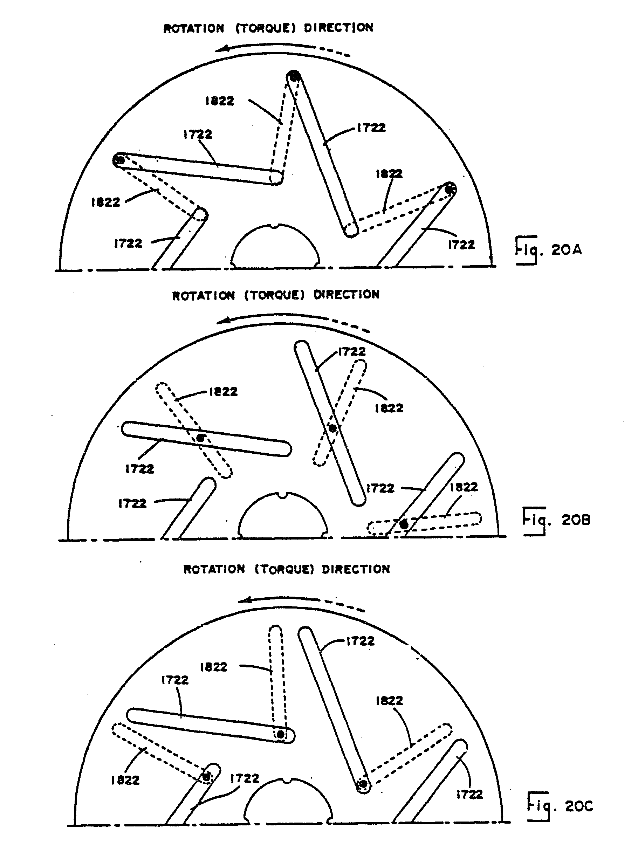

Referring now to Figs. 15A, 15B, 16A, 16B, 17A and 17B, therein are shown the components of a third embodiment of the automatic transmission of the present invention that functions like the described transmissions of the first and second emobidments, except as set out below. This transmission embodiment is particularly suited to applications that contemplate application of a large torque to minimize a likelihood of damage to the described star wheel and arm assemblies that could result from the additional stresses imposed. The third embodiment of the transmission, therefore, uses two dual opposing plates 1700 and 1800, that are shown in Figs. 15A, 15B, 16A, and 16B, respectively. Plates 1700 and 1800 have slots 1722 and 1822 whose paths cross over one another when the two plates are in their assembled position. In practice, the plates are designed such that the point of crossover will depend on the relative rotational position about the common center axis of plates 1700 and 1800. Sprocket axles 1900 are arranged between plates 1700 and 1800, the ends of each journaled in one of the slots 1722 formed in plates 1700 and an appropriate opposing slot 1822 formed in plates 1800. Each sprocket axle will come to rest at the point where the respective slots 1722 and 1822 cross over one another. Therefore, as the relative position of plates 1700 and 1800 changes, as shown in Figs. 18 and 19, so do the crossover points and, hence, the position of sprocket axles 1900. So arranged, respective to a crossover point change, sprocket axles 1900 and the sprocket wheels journaled thereon move from a most inward radial position to a most outward radial position. Thereby, the effective diameter of the sprocket wheel assembly is varied from its smallest to its largest size. This is best illustrated in the side views of Figs. 20A, 20B, and 20C.

In all the transmission embodiments, the preferred structure includes two plates that are coupled together by at least one bias member arranged to allow the plates' relative positions to be varied in response to applied torque. In the third embodiment, as shown in Fig. 19, bias spring 2160 is positioned on the outside, similar to the bias spring arrangment shown and described above with respect to the transmission second embodiment. Shown in Fig. 19, welds 1815 are applied to secure plate 1700 to hub 2119 after the plate is in position to complete the assembly. Like the other transmission embodiments, each sprocket wheel assembly of the third embodiment may be biased to its smallest or largest effective diameter, with an applied torque arranged to act on the sprocket wheels or to a member coupled to the plate assembly to move the sprocket wheel assemblies oppositely to their biasing. Bearings 1950 are preferably provided on the ends of sprocket axles 1900, as shown in the cutaway perspective view of Fig. 18 and in Fig. 19. The central hub area 2119 may either be a solid central shaft or a roller clutch assembly to allow free-wheeling.

CLAIMS:

1.      Automatic transmission apparatus for providing a continuously variable drive ratio comprising:

a pair of outer plates (310,320) arranged to receive a torque applied thereto;

a sprocket support structure arranged between said outer plates;

bias means (340) connected to said outer plates and to said sprocket support structure for providing a rotational force between said outer plates and said sprocket support structure so as to vary the relative positions of said outer plates and said sprocket support structure in response to an applied torque;

a plurality of sprocket wheels (341) each having an axle (311), with each axle supported by said sprocket support structure at two spaced apart locations along said axle's length, said sprocket wheels regularly spaced at points along the circumference of a circle defined by the positions of the sprocket wheel axles, whereby the radius of which circle is varied in relation to the relative motion of said sprocket support structure and said outer plates.

2.      Automatic transmission apparatus as in Claim 1, wherein the sprocket support structure comprises a star wheel (365) having a plurality of pairs of projections (368), each pair of projections including a pair of arms for supporting one of the sprocket wheel axles.

3.      Automatic transmission apparatus as in Claim 1 or 2, wherein the sprocket wheels are journaled on the sprocket wheel axles between the outer plates.

4.      Automatic transmission apparatus as in Claim 1 or 2, wherein the sprocket wheels are journaled on the sprocket wheel axles outside the outer plates.

Fig. 1

Fig. 2

0116731

1/9

Fig. 3A

Fig. 3B

Fig. 3C

Fig. 4

F. 5b          F. 5b

333

Fig. 5A

333

Fig. 5B

F. 6b

341

F. 6b

Fig. 6A

341

Fig. 6B

F. 7b

368

F. 7b

Fig. 7A

Fig. 7B

0116731

4/9

806

Fig. 8A

Fig. 8B

367

Fig. 9A

367

Fig. 9B

367

Fig. 9C

F. 11
1050
1051
1090
1031
1050
1075
1700
1075
1082
F. 11
Fig. 10

1075
1050
1050
1075
Fig. 11

Fig. 12

Fig. 13

Fig. 14A

REST

Fig. 14B

MEDIUM

Fig. 14C

MAXIMUM

Fig. 15A

Fig. 15B

Fig. 16A

Fig. B

Fig. 17A

Fig. 17B

0116731

Fig. 18

Fig. 19

ROTATION (TORQUE) DIRECTION

Fig. 20A

ROTATION (TORQUE) DIRECTION

Fig. 20B

ROTATION (TORQUE) DIRECTION

Fig. 20C

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A- 961 243 (BUREAU)<br>* Whole document * | 1,3 | B 62 M 9/08 |
| A | WO-A-8 002 129 (CHAPPELL)<br>* Page 3, lines 26-29 * | 2 | |
| A | US-A-3 867 851 (GREGORY)<br>* Figure 2 * | 4 | |
| A | US-A-4 158 317 (JAMES) | | |
| A | US-A-3 969 948 (PIPENHAGEN) | | |
| A | US-A-4 129 044 (ERICKSON) | | TECHNICAL FIELDS SEARCHED (Int. Cl. 3) |
| A | US-A-3 995 508 (NEWELL) | | B 62 M |

The present search report has been drawn up for all claims

| Place of search | Date of completion of the search | Examiner |
|---|---|---|
| THE HAGUE | 11-10-1983 | GEMMELL R.I.D. |